# EUROPÄISCHE PATENTSCHRIFT

(11) **EP 2 801 000 B1**
(45) Veröffentlichungstag und Bekanntmachung des Hinweises auf die Patenterteilung: **06.04.2016**
(21) Anmeldenummer: 13717231.8
(22) Anmeldetag: 08.04.2013
(51) Int. Cl.: G05B 13/02, G06N 3/04

(54) **VERFAHREN ZUR REGELUNG EINER TURBINE MIT EINEM REKURRENTEN NEURONALEN NETZ**
METHOD FOR CONTROLLING A TURBINE USING A RECURRENT NEURAL NETWORK
PROCÉDÉ DE RÉGLAGE D'UNE TURBINE AU MOYEN D'UN RÉSEAU NEURONAL RÉCURRENT

(30) Priorität: 23.04.2012 DE 102012206651
(43) Veröffentlichungstag der Anmeldung: 12.11.2014
(73) Patentinhaber: Siemens Aktiengesellschaft, 80333 München (DE)
(72) Erfinder: DÜLL, Siegmund, 80336 München (DE); UDLUFT, Steffen, 82223 Eichenau (DE); WEICHBRODT, Lina, 13187 Berlin (DE)
(86) Internationale Anmeldenummer: PCT/EP2013/057307
(87) Internationale Veröffentlichungsnummer: WO 2013/160090

(56) Entgegenhaltungen:
- WO-A2-00/55809
- DE-A1-102007 001 024
- DE-A1-102007 001 025
- DE-A1-102010 011 221

## Beschreibung

Die vorliegende Erfindung betrifft die Regelung einer Turbine, zum Beispiel einer Gasturbine oder einer Windturbine.

Eine Turbine kann im Betrieb eine Vielzahl von aufeinander folgenden, unterschiedlichen Zuständen annehmen. Um diese unterschiedlichen Zustände zu erfassen, werden herkömmlicherweise viele unterschiedliche Sensoren zur Bereitstellung von an der Turbine ermittelten Sensorwerten eingesetzt.

Aufgrund der dadurch gegebenen Komplexität nutzen viele bekannte Regelungsverfahren für Turbinen neuronale Netze.

Ein Beispiel eines solchen bekannten Verfahrens zur Regelung einer Turbine mittels eines neuronalen Netzes ist in der Patentschrift DE 10 2007 001 025 B4 beschrieben. DE 10 2007 001 0024 A1 und DE 10 2010 011 221 A1 zeigen ebenfalls Beispiele zur Regelung von technischen Systemen wie beispielsweise Turbinen mittels neuronaler Netze.

WO 00/55809 A2 beschreibt eine Anordnung miteinander verbundener Rechenelemente, ein Verfahren zur rechnergestützten Ermittlung einer Dynamik, die einem dynamischen Prozess zugrunde liegt, und ein Verfahren zum rechnergestützten Trainieren einer Anordnung miteinander verbundener Rechenelemente.

Bei der Regelung einer Turbine sind insbesondere Kurzzeiteffekte und Langzeiteffekte auszuregeln. Mit Kurzzeiteffekten sind solche Effekte gemeint, die auf kurzen oder kurzzeitigen Abhängigkeiten der Zustände der Turbine im Betrieb beruhen. Eine Regelung, die insbesondere für Kurzzeiteffekte einer Turbine geeignet ist, ist aus der WO 2011/110404 A1 bekannt. Demgegenüber sind mit Langzeiteffekten solche Effekte gemeint, die auf langen oder langzeitigen Abhängigkeiten der Zustände der Turbine im Betrieb beruhen.

Für das Beispiel einer Gasturbine können ungeregelte oder suboptimal geregelte Langzeiteffekte erhöhte Emissionen der Gasturbine und auch auftretende Dynamiken der Gasturbine verursachen.

Es ist daher eine Aufgabe der vorliegenden Erfindung, eine Regelung für eine Turbine zu schaffen, welche Kurzzeiteffekte und Langzeiteffekte ausregeln kann.

Demgemäß wird ein Verfahren zur Regelung einer Turbine, wie zum Beispiel einer Gasturbine oder einer Windturbine, vorgeschlagen. Die Turbine hat eine Anzahl von Sensoren zur Bereitstellung von an der Turbine ermittelten Sensorwerten und einer Anzahl von Aktoren zur Ansteuerung der Turbine. Die Turbine wird zu einem jeden Zeitpunkt mehrerer chronologischer Zeitpunkte der Regelung durch einen versteckten Zustand charakterisiert, welcher durch Sensorwerte und ein Bewertungssignal für den versteckten Zustand ableitbar und durch veränderbare Aktorwerte der Aktoren beeinflussbar ist. In einem Schritt a) des Verfahrens wird das dynamische Verhalten der Turbine mit einem rekurrenten neuronalen Netz umfassend eine Eingangsschicht, eine rekurrente versteckte Schicht und eine Ausgangsschicht basierend auf Trainingsdaten aus Sensorwerten, Aktorwerten und Bewertungssignalen modelliert wird. Dabei wird die Eingangsschicht aus ersten Vektoren von Neuronen gebildet, die Sensorwerte und/oder Aktorwerte zu den Zeitpunkten beschreiben. Ferner wird die rekurrente versteckte Schicht aus zweiten Vektoren von Neuronen gebildet, die den versteckten Zustand der Turbine zu den Zeitpunkten beschreiben, wobei chronologisch für alle Zeitpunkte jeweils zwei Vektoren der zweiten Vektoren mit einer einen Zeitpunkt überbrückenden, ersten Verbindung verbunden werden und zusätzlich chronologisch jeweils zwei Vektoren der zweiten Vektoren mit einer zumindest zwei Zeitpunkte überbrückenden, zweiten Verbindung verbunden werden. Weiter wird die Ausgangsschicht aus zumindest einem dritten Vektor von Neuronen gebildet, die das Bewertungssignal oder zumindest einen Teil der Sensorwerte und/oder zumindest einen Teil der Aktorwerte zu den Zeitpunkten beschreiben.

In einem Schritt b) des Verfahrens wird auf den versteckten Zuständen ein Lern- und/oder Optimierungsverfahren zur Bereitstellung eines Regelsatzes mit optimierten Aktorwerten für einen jeden versteckten Zustand durchgeführt.

In einem Schritt c) des Verfahrens wird der aktuelle versteckte Zustand mittels des rekurrenten neuronalen Netzes und aktuell ermittelter Sensorwerte der Sensoren ermittelt.

In einem Schritt d) des Verfahrens werden aktuelle Aktorwerte zur Ansteuerung der Aktoren mittels des bereitgestellten Regelsatzes und dem aktuellen versteckten Zustand ermittelt.

Mittels der ersten Verbindungen zwischen den Vektoren der zweiten Vektoren können Kurzzeiteffekte und mittels der zweiten Verbindungen können Langzeiteffekte ausgeregelt werden. Insbesondere durch Zweiteres können Emissionen und auch auftretende Dynamiken bei der Turbine minimiert werden.

Beispiele für Sensorwerte sind die Emissionswerte der Turbine, die Abgastemperatur der Turbine, aber auch die Umgebungstemperatur und Umgebungsdruck.

Beispiele für Aktorwerte sind die Vorleitschaufelstellung, der Gesamtgasstrom und einzustellende Mischverhältnisse der Gase.

Bei einer Ausführungsform wird als rekurrentes neuronales Netz ein entfaltetes rekurrentes neuronales Netz verwendet.

Bei einer weiteren Ausführungsform wird im Schritt a) iii) die Ausgangsschicht aus zumindest einem dritten Vektor von Neuronen gebildet, die das Bewertungssignal oder ausschließlich solche Sensorwerte und/oder Aktorwerte, welche das Bewertungssignal beeinflussen, zu den Zeitpunkten beschreiben.

Bei einer weiteren Ausführungsform werden außer der aktuelle versteckte Zustand zu dem aktuellen Zeitpunkt alle versteckten Zustände zu den vergangenen und den zukünftigen Zeitpunkten mittels einer zweiten Verbindung überbrückt.

Bei einer weiteren Ausführungsform werden die zweiten Verbindungen symmetrisch um den aktuellen versteckten Zustand angeordnet.

Bei einer weiteren Ausführungsform wird das rekurrente neuronale Netz in zwei Teilnetze aufgeteilt, welche durch den aktuellen versteckten Zustand verbunden werden, wobei das erste Teilnetz die versteckten Zustände für vergangene Zeitpunkte und das zweite Teilnetz die versteckten Zustände für zukünftige Zeitpunkte beschreiben.

Bei einer weiteren Ausführungsform werden die ersten Verbindungen und die zweiten Verbindungen durch neuronale Strukturen, beispielsweise durch Matrizen von Gewichten oder neuronale Verbindungen, bestehend aus Matrizen und weiteren Vektoren von Neuronen, ausgebildet.

Bei einer weiteren Ausführungsform werden die versteckten Zustände in der rekurrenten versteckten Schicht über Gewichte derart verbunden, dass sich die Gewichte für die zukünftigen Zeitpunkte von den Gewichten für die vergangenen Zeitpunkte unterscheiden.

Bei einer weiteren Ausführungsform wird für die zweiten Verbindungen eine jeweilige Länge L eingestellt, so dass eine vorbestimmte Anzahl N von Zeitpunkten überbrückt wird (N ≥ 2).

Bei einer weiteren Ausführungsform wird die Länge der zweiten Verbindungen mittels einer Heuristik eingestellt, wobei die Länge L der zweiten Verbindungen derart gewählt wird, dass die Gesamtzahl der notwendigen Schritte, um den aktuellen versteckten Zustand von den versteckten Zuständen der vergangenen Zeitpunkte zu erreichen, minimal ist.

Bei einer weiteren Ausführungsform wird bei der Modellierung des dynamischen Verhaltens der Turbine im Schritt a) das rekurrente neuronale Netz basierend auf den Trainingsdaten derart trainiert, dass die Neuronen der dritten Vektoren der Ausgangsschicht für einen oder mehrere zukünftige Zeitpunkte aus einem oder mehreren vergangenen Zeitpunkten prognostiziert werden.

Bei einer weiteren Ausführungsform wird im Schritt a) für das rekurrente neuronale Netz eine nicht-lineare Aktivierungsfunktion verwendet.

Bei einer weiteren Ausführungsform ist das Lern- und/oder Optimierungsverfahren im Schritt b) ein maschinelles Lernverfahren und insbesondere ein bestärkendes Lernverfahren.

Bei einer weiteren Ausführungsform umfasst das Lern- und/oder Optimierungsverfahren Dynamische Programmierung und/oder Prioritized Sweeping und/oder Q-Learning und/oder ein Recurrent Control Neural Network (RCNN). RCNN ist beispielsweise in der Patentschrift DE 10 2007 001 025 B4 beschrieben.

Bei einer weiteren Ausführungsform wird das Bewertungssignal durch eine Bewertungsfunktion repräsentiert, welche zumindest von einem Teil der Sensorwerte und/oder Aktorwerte abhängt.

Bei einer weiteren Ausführungsform verwendet das Lern- und/oder Optimierungsverfahren im Schritt b) die Bewertungssignale, um die Aktorwerte im Hinblick auf ein optimales Bewertungssignal auszuführen.

Bei einer weiteren Ausführungsform ist die Turbine eine Gasturbine oder eine Windturbine.

Bei einer weiteren Ausführungsform ist die Turbine eine Gasturbine, wobei das Bewertungssignal zumindest durch den Wirkungsgrad und/oder die Schadstoffemission der Gasturbine und/oder die Wechseldrücke und/oder die mechanischen und/oder thermischen Belastungen der Brennkammer der Gasturbine bestimmt wird.

Bei einer weiteren Ausführungsform ist die Turbine eine Windturbine, wobei das Bewertungssignal zumindest durch die Kraftbelastung und/oder Wechselbelastung auf ein oder mehrere Rotorblätter der Windturbine bestimmt wird.

Bei einer weiteren Ausführungsform werden in Schritt a) ii) zusätzlich chronologisch jeweils zwei Vektoren der zweiten Vektoren mit einer zumindest drei Zeitpunkte überbrückenden, dritten Verbindung verbunden.

Weiterhin wird ein Computerprogrammprodukt vorgeschlagen, welches auf einer programmgesteuerten Einrichtung die Durchführung des wie oben erläuterten Verfahrens veranlasst. Die programmgesteuerte Einrichtung ist insbesondere ein Computer.

Ein Computerprogramm-Produkt wie ein Computerprogramm-Mittel kann beispielsweise als Speichermedium, wie Speicherkarte, USB-Stick, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm-Produkt oder dem Computerprogramm-Mittel erfolgen.

Weiter wird eine Vorrichtung zur Regelung einer Turbine vorgeschlagen. Die Turbine umfasst eine Anzahl von Sensoren zur Bereitstellung von an der Turbine ermittelten Sensorwerten und eine Anzahl von Aktoren zur Ansteuerung der Turbine. Die Aktoren werden mittels Aktorwerten angesteuert. Die Turbine ist zu einem jeden Zeitpunkt mehrerer chronologischer Zeitpunkte der Regelung durch einen versteckten Zustand charakterisiert. Der versteckte Zustand ist aus den Sensorwerten und einem Bewertungssignal für den versteckten Zustand ableitbar. Der versteckte Zustand ist durch veränderbare Aktorwerte der Aktoren beeinflussbar.

Die Vorrichtung hat ein Modellierungsmittel, ein Bereitstellungsmittel, ein Ermittlungsmittel und ein Ausgabemittel. Das Modellierungsmittel ist dazu eingerichtet, das dynamische Verhalten der Turbine mit einem rekurrenten neuronalen Netz umfassend eine Eingangsschicht, eine rekurrente versteckte Schicht und eine Ausgangsschicht basierend auf Trainingsdaten aus Sensorwerten, Aktorwerten und Bewertungssignalen zu modellieren. Dabei wird die Eingangsschicht aus ersten Vektoren von Neuronen gebildet, die Sensorwerte und/oder Aktorwerte zu den Zeitpunkten beschreiben. Ferner wird die rekurrente versteckte Schicht aus zweiten Vektoren von Neuronen gebildet, die den versteckten Zustand der Turbine zu den Zeitpunkten beschreiben, wobei chronologisch für alle Zeitpunkte jeweils zwei Vektoren der zweiten Vektoren mit einer einen Zeitpunkt überbrückenden, ersten Verbindung verbunden werden und zusätzlich chronologisch jeweils zwei Vektoren der zweiten Vektoren mit einer zumindest zwei Zeitpunkte überbrückenden, zweiten Verbindung verbunden werden. Die Ausgangsschicht wird durch das Modellierungsmittel aus zumindest einem dritten Vektor von Neuronen gebildet, die das Bewertungssignal oder zumindest einen Teil der Sensorwerte und/oder zumindest einen Teil der Aktorwerte zu den Zeitpunkten beschreiben.

Das Bereitstellungsmittel ist dazu eingerichtet, auf den versteckten Zuständen ein Lern- und/oder Optimierungsverfahren zur Bereitstellung eines Regelsatzes mit optimierten Aktorwerten für einen jeden versteckten Zustand durchzuführen.

Des Weiteren ist das Ermittlungsmittel dazu eingerichtet, den aktuellen versteckten Zustand mittels des rekurrenten neuronalen Netzes und aktuell ermittelte Sensorwerte der Sensoren der Turbine zu ermitteln.

Das Ausgabemittel ist dazu eingerichtet, aktuelle Aktorwerte zur Ansteuerung der Aktoren mittels des bereitgestellten Regelsatzes und dem aktuellen versteckten Zustand zu ermitteln und an die Aktoren der Turbine auszugeben.

Das jeweilige Mittel kann hardwaretechnisch oder auch softwaretechnisch implementiert sein. Bei einer hardwaretechnischen Implementierung kann das jeweilige Mittel als Vorrichtung oder als Teil einer Vorrichtung, zum Beispiel als Computer oder als Mikroprozessor ausgebildet sein. Bei einer softwaretechnischen Implementierung kann das jeweilige Mittel als Computerprogrammprodukt, als eine Funktion, als eine Routine, als Teil eines Programmcodes oder als ausführbares Objekt ausgebildet sein.

Außerdem wird eine Turbine vorgeschlagen, welche eine wie oben erläuterte Vorrichtung zur Regelung der Turbine umfasst.

Ferner wird eine Regelung vorgeschlagen, welche eine Turbine und eine wie oben erläuterte Vorrichtung zur Regelung der Turbine umfasst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Dabei zeigen:
- Fig. 1: ein schematisches Diagramm zur Darstellung des dynamischen Verhaltens einer Turbine;
- Fig. 2: ein schematisches Ablaufdiagramm eines Verfahrens zur Regelung einer Turbine;
- Fig. 3: eine schematische Darstellung eines rekurrenten neuronalen Netzes zur Modellierung des dynamischen Verhaltens einer Turbine; und
- Fig. 4: ein schematisches Diagramm einer Vorrichtung zur Regelung einer Turbine.

In den Fig. sind gleiche oder funktionsgleiche Elemente mit denselben Bezugszeichen versehen worden, sofern nichts anderes angegeben ist.

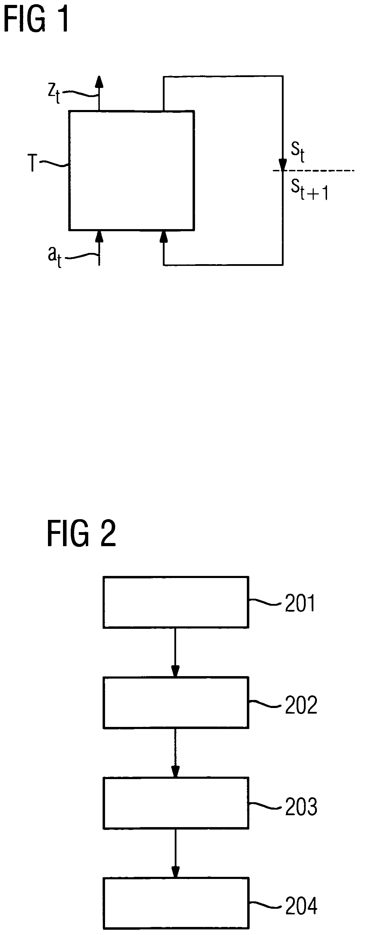

Fig. 1 zeigt schematisch die Dynamik einer vorliegend betrachteten Turbine T. Die Turbine T wird dabei zu einem jeweiligen Zeitpunkt t durch einen beobachtbaren Zustand zₜ, welcher durch an der Turbine T ermittelte Sensorwerte definiert ist und eine an der Turbine T durchgeführte Aktion beschrieben. Die Aktion an der Turbine T ist durch Aktorwerte aₜ bestimmt, mittels welcher die Aktoren die Turbine T ansteuern. Die Turbine T wird durch interne oder versteckte Zustände sₜ bestimmt, welche nicht direkt beobachtbar sind. Der versteckte Zustand sₜ ändert sich dabei durch sich ändernde Aktorwerte aₜ und geht in den Zustand sₜ₊₁ über. Der Zustand sₜ₊₁ hängt von den Aktorwerten aₜ sowie dem vorhergehenden Zustand sₜ ab. Die Turbine T ist ferner durch ein geeignetes Bewertungssignal rₜ (nicht aus Fig. 1 ersichtlich) spezifiziert, welches definiert, inwieweit die in einem Zustand der Turbine T durchgeführte Aktion durch die Aktorwerte aₜ im Hinblick auf einen optimalen Betrieb der Turbine T als gut einzustufen ist. Beispiele solcher Bewertungssignale sind die Schadstoffemission der Turbine oder die mechanische wechselnde Belastung der Turbine im Betrieb, wobei die Zielsetzung der Regelung der Turbine T eine geringe Emission und/oder eine geringe mechanische Belastung ist.

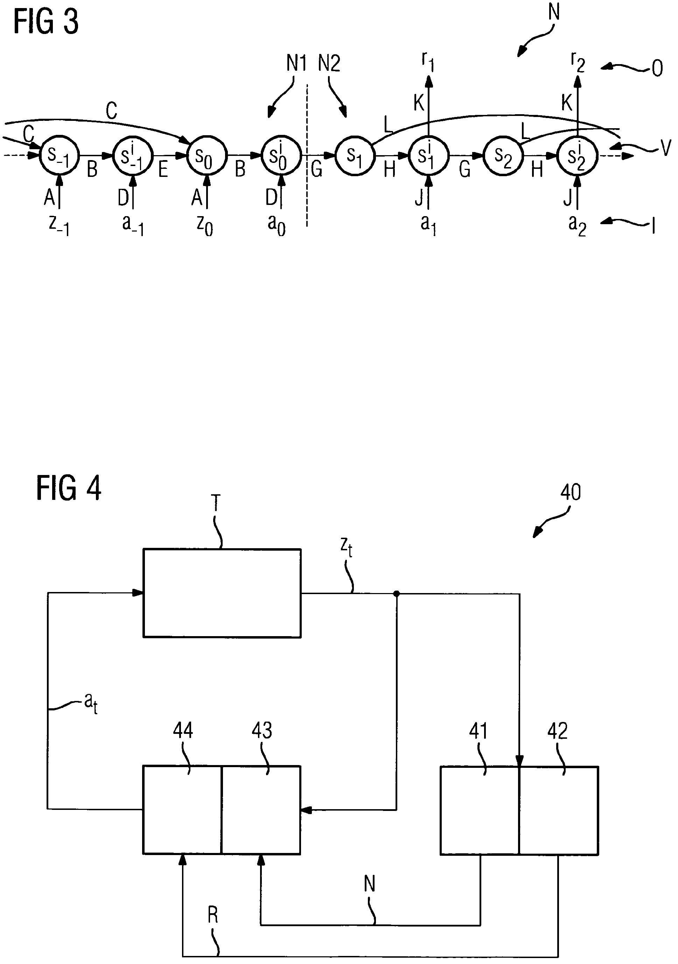

Vorliegend wird unter Berücksichtigung des Bewertungssignals rₜ zunächst eine geeignete Modellierung des dynamischen Verhaltens der Turbine T basierend auf Trainingsdaten umfassend Sensorwerte, Aktorwerte und Bewertungssignale zu einer Vielzahl von Zeitpunkten t durchgeführt. Details hierzu ergeben sich aus den nachfolgenden Fig. 2 und 3.

Im Folgenden wird als Bewertungssignal auch ein Belohnungssignal betrachtet, welches häufig auch als Reward bezeichnet wird und welches im Betrieb der Turbine T möglichst groß sein sollte. Es wird davon ausgegangen, dass die Beschreibung der Turbine basierend auf den Zuständen, Sensorwerten und Aktorwerten einen so genannten Markow-Entscheidungsprozess darstellt, wobei für diesen Entscheidungsprozess nur das Belohnungssignal rₜ eine relevante Information darstellt. Markow-Entscheidungsprozesse sind beispielsweise in den Druckschriften DE 10 2007 001 025 B4 und WO 2011/110404 A1 näher beschrieben.

Vorliegend wird die für den durch die Belohnung rₜ definierten Markow-Entscheidungsprozess relevante Information in den versteckten Zustand sₜ codiert, wobei für den Markow-Entscheidungsprozess nicht relevante Informationen unberücksichtigt bleiben. Um dies zu erreichen, ist das rekurrente neuronale Netz, welches zur Modellierung des dynamischen Verhaltens der Turbine T verwendet wird, insbesondere derart ausgestaltet, dass es in der Ausgangsschicht O das Belohnungssignal rₜ bzw. ausschließlich das Belohnungssignal rₜ beeinflussende Sensorwerte zₜ und Aktorwerte aₜ enthält, wie weiter unten noch näher beschrieben wird (siehe Fig. 3). Ein rekurrentes neuronales Netz, welches zur Regelung einer Turbine T verwendet werden kann, ist in der WO 2011/110404 A beschrieben. Dieses neuronale Netz kann auch als Markow-Entscheidungsprozess-Extraktionsnetzwerk bezeichnet werden (MPEN-Netz).

Fig. 2 illustriert ein Ablaufdiagramm eines Ausführungsbeispiels eines Verfahrens zur Regelung einer Turbine, welches die Schritte 201 bis 204 aufweist. Die Turbine ist zum Beispiel eine Gasturbine oder eine Windturbine. Die Turbine hat eine Anzahl von Sensoren zur Bereitstellung von an der Turbine ermittelten Sensorwerten und einer Anzahl von Aktoren zur Ansteuerung der Turbine. Die Turbine wird zu einem jeden Zeitpunkt mehrerer chronologischer Zeitpunkte der Regelung durch einen versteckten Zustand charakterisiert, welcher durch Sensorwerte und ein Bewertungssignal für den versteckten Zustand ableitbar ist und durch veränderbare Aktorwerte der Aktoren beeinflussbar ist.

In Schritt 201 wird das dynamische Verhalten der Turbine mit einem rekurrenten neuronalen Netz umfassend eine Eingangsschicht, eine rekurrente versteckte Schicht und eine Ausgangsschicht basierend auf Trainingsdaten aus Sensorwerten, Aktorwerten und Bewertungssignalen modelliert. Dabei wird die Eingangsschicht aus ersten Vektoren von Neuronen gebildet, die Sensorwerte und/oder Aktorwerte zu den Zeitpunkten beschreiben. Ferner wird die rekurrente versteckte Schicht aus zweiten Vektoren von Neuronen gebildet, die den versteckten Zustand der Turbine zu den Zeitpunkten beschreiben, wobei chronologisch für alle Zeitpunkte jeweils zwei Vektoren der zweiten Vektoren mit einer einen einzigen Zeitpunkt überbrückenden, ersten Verbindung verbunden werden und zusätzlich chronologisch jeweils zwei Vektoren der zweiten Vektoren mit einer zumindest zwei Zeitpunkte überbrückenden, zweiten Verbindung verbunden werden. Weiter wird die Ausgangsschicht aus zumindest einem dritten Vektor von Neuronen gebildet, die das Bewertungssignal oder zumindest einen Teil der Sensorwerte und/oder zumindest einen Teil der Aktorwerte zu den Zeitpunkten beschreiben.

In Schritt 202 wird auf den versteckten Zuständen ein Lern- und/oder Optimierungsverfahren zur Bereitstellung eines Regelsatzes mit optimierten Aktorwerten für einen jeden versteckten Zustand durchgeführt.

In Schritt 203 wird der aktuelle versteckte Zustand mittels des rekurrenten neuronalen Netzes und aktuell ermittelter Sensorwerte der Sensoren ermittelt.

In Schritt 204 werden aktuelle Aktorwerte zur Ansteuerung der Aktoren mittels des bereitgestellten Regelsatzes und dem aktuellen versteckten Zustand ermittelt.

Das in Schritt 201 beschriebene rekurrente neuronale Netz N wird auszugsweise in Fig. 3 gezeigt. Das rekurrente neuronale Netz der Fig. 3 ist ein Markow-Entscheidungsprozess-Extraktionsnetzwerk (MPEN-Netz) mit Abkürzungen C, K in der rekurrenten versteckten Schicht V, die in der Fig. 3 mit C und K gekennzeichnet sind und auch als Shortcuts bezeichnet werden können. Aus diesem Grunde kann das rekurrente neuronale Netz N der Fig. 3 auch als MPEN-S-Netz bezeichnet werden, wobei das S für Shortcuts steht.

Die Eingangsschicht I des MPEN-S-Netzes N der Fig. 3 ist mit I, die versteckte Schicht mit V und die Ausgangsschicht mit O bezeichnet.

Die Eingangsschicht I umfasst Sensorwerte z₋₁, z₀ sowie Aktorwerte a₋₁, a₀, a₁, a₂. Diese fließen in geeigneter Weise in die entsprechenden versteckten Zustände sₜ in der versteckten Schicht V ein. Zu bemerken ist, dass die tiefgestellten Indizes in der Fig. 3 den jeweiligen Zeitpunkt t bezeichnen. Übergangsmatrizen sind mit jeweiligen Großbuchstaben A-E und G, H, J, K und L bezeichnet.

An einen versteckten Zustand sₜ und eine in diesem versteckten Zustand sₜ ausgeführte Aktion - beschrieben durch die Aktorwerte aₜ - ist ferner die bereits oben erwähnte Belohnung rₜ gekoppelt, welche für den Zeitpunkt t=1 in Fig. 3 mit r₁ bezeichnet ist.

In Fig. 3 ist dabei für die Ausgangsschicht O eine zum aktuellen Zeitpunkt t zu prognostizierende Belohnung rₜ wiedergegeben. Die Belohnung r₁ gilt damit für den Zeitpunkt t = 1, wohingegen die Belohnung r₂ für den Zeitpunkt t = 2 gilt.

Besonders bemerkenswert in dem MPEN-S-Netz N der Fig. 3 ist, dass es in der versteckten Schicht V zwischen den einzelnen Neuronen zwei verschiedene Arten von Verbindungen gibt. Es gibt erste Verbindungen B, E, G, H, welche einen Zeitpunkt t überbrücken. Ferner gibt es zweite Verbindungen C, K, welche zumindest zwei Zeitpunkte überbrücken und die oben erwähnten Abkürzungen oder Shortcuts darstellen. Der Begriff Abkürzung oder Shortcut ergibt sich aus dem Umstand, dass sich zu einem einzelnen Zeitschritt mehrere Zeitpunkte mit einem solchen Shortcut C, K überbrücken lassen.

Die Fig. 3 zeigt, dass das rekurrente neuronale Netz N in zwei Teilnetze N1, N2 aufgeteilt ist. Diese Teilung des neuronalen Netzes N in Fig. 3 zeigt die gestrichelte Linie. Die beiden Teile N1 und N2 sind durch den aktuellen versteckten Zustand s₀ verbunden. Das erste Teilnetz N1 beschreibt dabei die versteckten Zustände s₋₁ für vergangene Zeitpunkte t₋₁, wohingegen das zweite Teilnetz N2 die versteckten Zustände s₁, s₂ für zukünftige Zeitpunkte s₁, s₂ beschreibt. Ohne Einschränkung der Allgemeinheit zeigt die Fig. 3 nur einen vergangenen Zeitpunkt und zwei zukünftige Zeitpunkte.

Die zweiten Verbindungen C, K sind symmetrisch um den aktuellen versteckten Zustand s₀ angeordnet. Alle versteckten Zustände sₜ zu den vergangenen und den zukünftigen Zeitpunkten sind mittels einer zweiten Verbindung C, K überbrückt. Die zweiten Verbindungen C sind für die vergangenen Zeitpunkte verwendet, wohingegen die zweiten Verbindungen K für die zukünftigen Zeitpunkte Verwendung finden. Der aktuelle versteckte Zustand s₀ ist nicht mittels einer zweiten Verbindung C, K überbrückt.

Ferner verdeutlicht die Fig. 3, dass vorliegend als rekurrentes neuronales Netz N ein entfaltetes rekurrentes neuronales Netz N Verwendung finden kann.

Die ersten Verbindungen B, E, G, H und die zweiten Verbindungen C, K sind durch neuronale Strukturen, insbesondere durch Matrizen von gemischten oder neuronalen Verbindungen, ausgebildet.

Insbesondere wird für die zweiten Verbindungen C, K eine jeweilige Länge L eingestellt, so dass eine vorbestimmte Anzahl von Zeitpunkten t überbrückt wird (N ≥ 2).

Die Länge L der zweiten Verbindungen C, K wird mittels einer Heuristik eingestellt. Dabei wird die Länge L der zweiten Verbindungen C, K derart gewählt, dass die Gesamtzahl der notwendigen Schritte, um den aktuellen versteckten Zustand s₀ von den versteckten Zuständen s₋₂, s₋₁ der vergangenen Zeitpunkte t₋₂, t₋₁ zu erreichen, minimal ist.

Außerdem sind vorzugsweise die Matrizen in der Vergangenheit A-E unterschiedlich zu den Matrizen G, H, J, K, L der Zukunft.

In Fig. 4 ist ein schematisches Diagramm einer Vorrichtung 40 zur Regelung einer Turbine T dargestellt. Die Turbine T umfasst eine Anzahl von Sensoren zur Bereitstellung von an der Turbine T ermittelten Sensorwerten zₜ und eine Anzahl von Aktoren zur Ansteuerung der Turbine T (nicht gezeigt). Die Aktoren werden mittels Aktorwerten aₜ angesteuert (vgl. Fig. 1). Die Turbine T ist zu einem jeden Zeitpunkt t mehrerer chronologischer Zeitpunkte der Regelung durch einen versteckten Zustand sₜ charakterisiert. Der versteckte Zustand sₜ ist aus den Sensorwerten zₜ und einem Bewertungssignal rₜ für den versteckten Zustand sₜ ableitbar. Der versteckte Zustand sₜ ist durch veränderbare Aktorwerte aₜ der Aktoren beeinflussbar.

Die Vorrichtung 40 hat ein Modellierungsmittel 41, ein Bereitstellungsmittel 42, ein Ermittlungsmittel 43 und ein Ausgabemittel 44. Das Modellierungsmittel 41 ist dazu eingerichtet, das dynamische Verhalten der Turbine T mit einem rekurrenten neuronalen Netz N umfassend eine Eingangsschicht I, eine rekurrente versteckte Schicht V und eine Ausgangsschicht O basierend auf Trainingsdaten aus Sensorwerten zₜ, Aktorwerten aₜ und Bewertungssignalen rₜ zu modellieren (vgl. hierzu Fig. 3). Dabei wird die Eingangsschicht I aus ersten Vektoren von Neuronen gebildet, die Sensorwerte zₜ und/oder Aktorwerte aₜ zu den Zeitpunkten t beschreiben. Ferner wird die rekurrente versteckte Schicht V aus zweiten Vektoren von Neuronen gebildet, die den versteckten Zustand sₜ der Turbine T zu den Zeitpunkten t beschreiben, wobei chronologisch für alle Zeitpunkte t jeweils zwei Vektoren der zweiten Vektoren mit einer einen Zeitpunkt t überbrückenden, ersten Verbindung B, E, G, H verbunden werden und zusätzlich chronologisch jeweils zwei Vektoren der zweiten Vektoren mit einer zumindest zwei Zeitpunkte überbrückenden, zweiten Verbindung C, K verbunden werden. Die Ausgangsschicht O wird durch das Modellierungsmittel 41 aus zumindest einem dritten Vektor von Neuronen gebildet, die das Bewertungssignal rₜ oder zumindest einen Teil der Sensorwerte zₜ und/oder zumindest einen Teil der Aktorwerte aₜ zu den Zeitpunkten t beschreiben.

Das Bereitstellungsmittel 42 ist dazu eingerichtet, auf den versteckten Zuständen sₜ ein Lern- und/oder Optimierungsverfahren zur Bereitstellung eines Regelsatzes R mit optimierten Aktorwerten aₜ für einen jeden versteckten Zustand sₜ durchzuführen.

Des Weiteren ist das Ermittlungsmittel 43 dazu eingerichtet, den aktuellen versteckten Zustand sₜ mittels des rekurrenten neuronalen Netzes N und aktuell ermittelte Sensorwerte zₜ der Sensoren der Turbine T zu ermitteln.

Das Ausgabemittel 44 ist dazu eingerichtet, aktuelle Aktorwerte aₜ zur Ansteuerung der Aktoren mittels des bereitgestellten Regelsatzes R und dem aktuellen versteckten Zustand sₜ zu ermitteln und an die Aktoren der Turbine T auszugeben.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Regelung einer Turbine (T) mit einer Anzahl von Sensoren zur Bereitstellung von an der Turbine (T) ermittelten Sensorwerten (zₜ) und einer Anzahl von Aktoren zur Ansteuerung der Turbine (T), die zu einem jeden Zeitpunkt (t) mehrerer chronologischer Zeitpunkte (t) der Regelung durch einen versteckten Zustand (sₜ) charakterisiert wird, welcher durch Sensorwerte (zₜ) und ein Bewertungssignal (rₜ) für den versteckten Zustand (sₜ) ableitbar und durch veränderbare Aktorwerte (aₜ) der Aktoren beeinflussbar ist, bei dem
a) das dynamische Verhalten der Turbine (T) mit einem rekurrenten neuronalen Netz (N) umfassend eine Eingangsschicht (I), eine rekurrente versteckte Schicht (V) und eine Ausgangsschicht (O) basierend auf Trainingsdaten aus Sensorwerten (zₜ), Aktorwerten (aₜ) und Bewertungssignalen (rₜ) modelliert wird (201), wobei:
i) die Eingangsschicht (I) aus ersten Vektoren von Neuronen gebildet wird, die Sensorwerte (zₜ) und/oder Aktorwerte (aₜ) zu den Zeitpunkten (t) beschreiben,
ii) die rekurrente versteckte Schicht (V) aus zweiten Vektoren von Neuronen gebildet wird, die den versteckten Zustand (sₜ) der Turbine (T) zu den Zeitpunkten (t) beschreiben, wobei chronologisch für alle Zeitpunkte (t) jeweils zwei Vektoren der zweiten Vektoren mit einer einen Zeitpunkt (t) überbrückenden, ersten Verbindung (B, E, G, H) verbunden werden und zusätzlich chronologisch jeweils zwei Vektoren der zweiten Vektoren mit einer zumindest zwei Zeitpunkte (t) überbrückenden, zweiten Verbindung (C, K) verbunden werden,
iii) die Ausgangsschicht (O) aus zumindest einem dritten Vektor von Neuronen gebildet wird, die das Bewertungssignal (rₜ) oder zumindest einen Teil der Sensorwerte (zₜ) und/oder zumindest einen Teil der Aktorwerte (aₜ) zu den Zeitpunkten (t) beschreiben,
b) an den versteckten Zuständen (sₜ) ein Lern- und/oder Optimierungsverfahren zur Bereitstellung eines Regelsatzes (R) mit optimierten Aktorwerten (aₜ) für einen jeden der versteckten Zustände (sₜ) durchgeführt wird (202),
c) der aktuelle versteckte Zustand (sₜ) mittels des rekurrenten neuronalen Netzes (N) und aktuell ermittelter Sensorwerte (zₜ) der Sensoren ermittelt wird (203), und
d) aktuelle Aktorwerte (aₜ) zur Ansteuerung der Aktoren mittels des bereitgestellten Regelsatzes (R) und dem aktuellen versteckten Zustand (sₜ) ermittelt werden (204).

2. Verfahren nach Anspruch 1, bei dem als rekurrentes neuronales Netz (N) ein entfaltetes rekurrentes neuronales Netz verwendet wird.

3. Verfahren nach Anspruch 1 oder 2, bei dem außer der aktuelle versteckte Zustand (s₀) zu dem aktuellen Zeitpunkt alle versteckten Zustände (s₋₁, s₁, s₂) zu den vergangenen und den zukünftigen Zeitpunkten mittels einer zweiten Verbindung (C, K) überbrückt werden.

4. Verfahren nach einem der Ansprüche 1 bis 3, bei dem die zweiten Verbindungen (C, K) symmetrisch um den aktuellen versteckten Zustand (s₀) angeordnet werden.

5. Verfahren nach einem der Ansprüche 1 bis 4, bei dem das rekurrente neuronale Netz (N) in zwei Teilnetze (N1, N2) aufgeteilt wird, welche durch den aktuellen versteckten Zustand (s₀) verbunden werden, wobei das erste Teilnetz (N1) die versteckten Zustände (s₋₁) für vergangene Zeitpunkte und das zweite Teilnetz (N2) die versteckten Zustände (s₁, s₂) für zukünftige Zeitpunkte beschreiben.

6. Verfahren nach einem der Ansprüche 1 bis 5, bei dem die ersten Verbindungen (B, E, G, H) und die zweiten Verbindungen (C, K) durch neuronale Strukturen, beispielsweise durch Matrizen von Gewichten oder neuronale Verbindungen, bestehend aus Matrizen und weiteren Vektoren von Neuronen, gebildet werden.

7. Verfahren nach einem der Ansprüche 1 bis 6, bei dem für die zweiten Verbindungen (C, K) eine jeweilige Länge L eingestellt wird, so dass eine vorbestimmte Anzahl N von Zeitpunkten überbrückt wird (N ≥ 2).

8. Verfahren nach Anspruch 7, bei dem die Länge (L) der zweiten Verbindungen (L, K) mittels einer Heuristik eingestellt wird, wobei die Länge (L) der zweiten Verbindungen (C, K) derart gewählt wird, dass die Gesamtzahl der notwendigen Schritte, um den aktuellen versteckten Zustand (s₀) von den versteckten Zuständen (s₋₁, s₋₂) der vergangenen Zeitpunkte zu erreichen, minimal ist.

9. Verfahren nach einem der Ansprüche 1 bis 8, bei dem das Lern- und/oder Optimierungsverfahren im Schritt b) ein maschinelles Lernverfahren und insbesondere ein bestärkendes Lernverfahren ist.

10. Verfahren nach Anspruch 9, bei dem das Lern- und/oder Optimierungsverfahren Dynamische Programmierung und/oder Prioritized Sweeping und/oder Q-Learning und/oder ein Recurrent Control Neural Network, RCNN, umfasst.

11. Verfahren nach einem der Ansprüche 1 bis 10, bei dem das Bewertungssignal (rₜ) durch eine Bewertungsfunktion repräsentiert wird, welche zumindest von einem Teil der Sensorwerte (zₜ) und/oder Aktorwerte (aₜ) abhängt.

12. Verfahren nach einem der Ansprüche 1 bis 11, bei dem das Lern- und/oder Optimierungsverfahren im Schritt b) die Bewertungssignale (rₜ) verwendet, um die Aktorwerte (aₜ) im Hinblick auf ein optimales Bewertungssignal auszuführen.

13. Verfahren nach einem der Ansprüche 1 bis 12, bei dem die Turbine (T) eine Gasturbine ist, wobei das Bewertungssignal (rₜ) zumindest durch den Wirkungsgrad und/oder die Schadstoffemission der Gasturbine und/oder die Wechseldrücke und/oder die mechanischen und/oder thermischen Belastungen der Brennkammer der Gasturbine bestimmt wird.

14. Verfahren nach einem der Ansprüche 1 bis 12, bei dem die Turbine (T) eine Windturbine ist, wobei das Bewertungssignal (rₜ) zumindest durch die Kraftbelastung und/oder Wechselbelastung auf ein oder mehrere Rotorblätter der Windturbine bestimmt wird.

15. Computerprogrammprodukt mit einem auf einem maschinenlesbaren Träger gespeicherten Programmcode zur Durchführung des Verfahrens nach einem der vorhergehenden Ansprüche, wenn das Programm auf einem Rechner abläuft.

## Claims

1. Method for controlling a turbine (T) having a number of sensors for providing sensor values (zₜ) ascertained on the turbine (T) and a number of actuators for actuating the turbine (T) and that is characterized at each instant (t) from a plurality of chronological instants (t) of the control by a hidden state (sₜ) that can be derived by sensor values (zₜ) and a rating signal (rₜ) for the hidden state (sₜ) and can be influenced by alterable actuator values (aₜ) for the actuators, in which
a) the dynamic behavior of the turbine (T) is modeled (201) with a recurrent neural network (N) comprising an input layer (I), a recurrent hidden layer (V) and an output layer (0) on the basis of training data comprising sensor values (zₜ), actuator values (aₜ) and rating signals (rₜ), wherein:
i) the input layer (I) is formed from first vectors of neurons that describe sensor values (zₜ) and/or actuator values (aₜ) at the instants (t),
ii) the recurrent hidden layer (V) is formed from second vectors of neurons that describe the hidden state (sₜ) of the turbine (T) at the instants (t), wherein chronologically, for all the instants (t), two respective vectors from the second vectors are connected to a first connection (B, E, G, H) that spans one instant (t) and, additionally chronologically, two respective vectors from the second vectors are connected to a second connection (C, K) that spans at least two instants (t),
iii) the output layer (0) is formed from at least one third vector of neurons that describe the rating signal (rₜ) or at least one portion of the sensor values (zₜ) and/or at least one portion of the actuator values (aₜ) at the instants (t),
b) a learning and/or optimization method is performed (202) on the hidden states (sₜ) in order to provide a set of rules (R) having optimized actuator values (aₜ) for each of the hidden states (sₜ),
c) the current hidden state (sₜ) is ascertained (203) by means of the recurrent neural network (N) and currently ascertained sensor values (zₜ) from the sensors, and
d) current actuator values (aₜ) are ascertained (204) in order to actuate the actuators by means of the provided set of rules (R) and the current hidden state (sₜ).

2. Method according to Claim 1, in which the recurrent neural network (N) used is a deployed recurrent neural network.

3. Method according to Claim 1 or 2, in which apart from the current hidden state (s₀) at the current instant, all the hidden states (s₋₁, s₁, s₂) at the past and future instants are spanned by means of a second connection (C, K).

4. Method according to one of Claims 1 to 3, in which the second connections (C, K) are arranged symmetrically about the current hidden state (s₀).

5. Method according to one of Claims 1 to 4, in which the recurrent neural network (N) is divided into two subnetworks (N1, N2) that are connected by the current hidden state (s₀), wherein the first subnetwork (N1) describes the hidden states (s₋₁) for past instants and the second subnetwork (N2) describes the hidden states (s₁, s₂) for future instant.

6. Method according to one of Claims 1 to 5, in which the first connections (B, E, G, H) and the second connections (C, K) are formed by neural structures, for example by matrices of weights or neural connections, comprising matrices and further vectors of neurons.

7. Method according to one of Claims 1 to 6, in which a respective length L is set for the second connections (C, K), so that a predetermined number N of instants is spanned (N ≥ 2).

8. Method according to Claim 7, in which the length (L) of the second connections (L, K) is set by means of a heuristic, wherein the length (L) of the second connections (C, K) is chosen such that the total number of necessary steps for reaching the current hidden state (s₀) from the hidden states (s₋₁, s₋₂) of the past instants is minimal.

9. Method according to one of Claims 1 to 8, in which the learning and/or optimization method in step b) is a computer learning method and particularly a strengthening learning method.

10. Method according to Claim 9, in which the learning and/or optimization method comprises dynamic programming and/or prioritized sweeping and/or Q learning and/or a recurrent control neural network, RCNN.

11. Method according to one of Claims 1 to 10, in which the rating signal (rₜ) is represented by a rating function that is dependent at least on a portion of the sensor values (zₜ) and/or actuator values (aₜ).

12. Method according to one of Claims 1 to 11, in which the learning and/or optimization method in step b) uses the rating signals (rₜ) in order to implement the actuator values (aₜ) for an optimum rating signal.

13. Method according to one of Claims 1 to 12, in which the turbine (T) is a gas turbine, wherein the rating signal (rₜ) is determined at least by the efficiency and/or pollutant emission of the gas turbine and/or the alternating pressures and/or the mechanical and/or thermal loads on the combustion chamber of the gas turbine.

14. Method according to one of Claims 1 to 12, in which the turbine (T) is a wind turbine, wherein the rating signal (rₜ) is determined at least by the force loading and/or alternating loading on one or more rotor blades of the wind turbine.

15. Computer program product having a program code, stored on a machine-readable medium, for performing the method according to one of the preceding claims when the program runs on a computer.

## Revendications

1. Procédé de régulation d'une turbine (T) au moyen d'un nombre de capteurs destinés à fournir des valeurs de capteur (zₜ) détectées sur la turbine (T) et d'un nombre d'acteurs destinés à commander la turbine (T) qui, à chaque moment (t) de plusieurs moments (t) chronologiques de la régulation, est **caractérisée par** un état caché (sₜ) lequel est déductible au moyen de valeurs de capteur (zₜ) et d'un signal d'évaluation (rₜ) pour l'état caché (sₜ) et est influençable par des valeurs d'acteur modifiables (aₜ) des acteurs, dans lequel
a) le comportement dynamique de la turbine (T) est modelé (201) au moyen d'un réseau neuronal récurrent (N) comprenant une couche d'entrée (I), une couche cachée récurrente (V) et une couche de sortie (0) sur la base de données d'entraînement provenant de valeurs de capteur (zₜ), de valeur d'acteur (aₜ) et de signaux d'évaluation (rₜ) :
i) la couche d'entrée (I) étant formée à partir de premiers vecteurs de neurones qui décrivent les valeurs de capteur (zₜ) et/ou les valeurs d'acteur (rₜ) aux moments (t),
ii) la couche cachée récurrente (V) étant formée à partir de deuxièmes vecteurs de neurones qui décrivent l'état caché (sₜ) de la turbine (T) aux moments (t), respectivement deux vecteurs des deuxièmes vecteurs, de manière chronologique pour tous les moments (t), étant reliés au moyen d'une première liaison (B, E, G, H) surmontant un moment (t) et, en plus de manière chronologique, respectivement deux vecteurs des deuxièmes vecteurs étant reliés au moyen d'une deuxième liaison (C, K) surmontant au moins deux moments (t),
iii) la couche de sortie (0) étant formée à partir d'au moins un troisième vecteur de neurones qui décrit le signal d'évaluation (rₜ) ou au moins une partie des valeurs de capteur (zₜ) et/ou au moins une partie des valeurs d'acteur (aₜ) aux moments (t),
b) un procédé d'apprentissage et/ou d'optimisation, destiné à fournir un jeu de règles (R) avec des valeurs d'acteur optimisées (rₜ) pour un des états cachés (sₜ), étant réalisé (202) aux états cachés (sₜ),
c) l'état caché actuel (sₜ) étant déterminé (203) au moyen du réseau neuronal récurrent (N) et de valeurs de capteur (zₜ) actuellement déterminées, et
d) les valeurs d'acteurs actuelles (aₜ) destinées à commander les acteurs étant déterminées (204) au moyen du jeu de règles fourni (R) et de l'état caché actuel (sₜ).

2. Procédé selon la revendication 1, dans lequel un réseau neuronal récurrent déployé est utilisé en tant que réseau neuronal (N).

3. Procédé selon la revendication 1 ou 2, dans lequel, outre l'état caché actuel (s₀) au moment actuel, tous les états cachés (s₋₁, s₁, s₂) aux moments passés et aux moments futurs sont surmontés au moyen d'une deuxième liaison (C, K).

4. Procédé selon l'une quelconque des revendications 1 à 3, dans lequel les deuxièmes liaisons (C, K) sont disposées symétriquement autour de l'état caché actuel (s₀).

5. Procédé selon l'une quelconque des revendications 1 à 4, dans lequel le réseau neuronal récurrent (N) est divisé en deux réseaux partiels (N1, N2), lesquels sont reliés par l'état caché actuel (s₀), le premier réseau partiel (N1) décrivant les états cachés (s₋₁) pour des moments passés et le deuxième réseau partiel (N2) décrivant les états cachés (s₁, s₂) pour des moments futurs.

6. Procédé selon l'une quelconque des revendications 1 à 5, dans lequel les premières liaisons (B, E, G, H) et les deuxièmes liaisons (C, K) sont formées par des structures neuronales, par exemple par des matrices de poids ou par des liaisons neuronales constituées de matrices et de vecteurs de neurones supplémentaires.

7. Procédé selon l'une quelconque des revendications 1 à 6, dans lequel pour les deuxièmes liaisons (C, K), une longueur respective L est réglée, de sorte qu'un nombre prédéterminé N de moments est surmonté (N ≥ 2).

8. Procédé selon la revendication 7, dans lequel la longueur (L) des deuxièmes liaisons (L, K) est réglée au moyen d'une heuristique, la longueur (L) des deuxièmes liaisons (C, K) étant sélectionnée de manière à ce que le nombre total des étapes nécessaires pour obtenir l'état caché actuel (s₀) des états cachés (s₋₁, s₋₂) des moments passés soit minimal.

9. Procédé selon l'une quelconque des revendications 1 à 8, dans lequel le procédé d'apprentissage et/ou d'optimisation mentionné à l'étape b) est un procédé d'apprentissage mécanique et notamment un procédé d'apprentissage renforçant.

10. Procédé selon la revendication 9, dans lequel le procédé d'apprentissage et/ou d'optimisation comprend une programmation dynamique et/ou un Prioritized Sweeping et/ou Q Learning et/ou un Recurrent Control Neural Network, RCNN.

11. Procédé selon l'une quelconque des revendications 1 à 10, dans lequel le signal d'évaluation (rₜ) est représenté par une fonction d'évaluation, laquelle dépend au moins d'une partie des valeurs de capteur (zₜ) et/ou des valeurs d'acteur (aₜ).

12. Procédé selon l'une quelconque des revendications 1 à 11, dans lequel le procédé d'apprentissage et/ou d'optimisation mentionné à l'étape b) utilise les signaux d'évaluation (rₜ) afin d'exécuter les valeurs d'acteur (aₜ) au regard d'un signal d'évaluation optimal.

13. Procédé selon l'une quelconque des revendications 1 à 12, dans lequel la turbine (T) est une turbine à gaz, le signal d'évaluation (rₜ) étant déterminé par le rendement et/ou l'émission de substances nocives de la turbine de gaz et/ou les pressions alternantes et/ou les charges mécaniques et/ou thermiques de la chambre de combustion de la turbine à gaz.

14. Procédé selon l'une quelconque des revendications 1 à 12, dans lequel la turbine (T) est une turbine à vent, le signal d'évaluation (rₜ) étant déterminé au moins par la charge de force et/ou la charge alternante sur une ou plusieurs pales de rotor de la turbine à vent.

15. Produit de programme informatique comprenant un support lisible par machine pour la réalisation du procédé selon l'une quelconque des revendications précédentes lorsque le programme se déroule sur un ordinateur.
